# EUROPEAN PATENT APPLICATION

(11) **EP 2 610 711 A1**
(43) Date of publication of application: **03.07.2013**
(21) Application number: 12196751.7
(22) Date of filing: 12.12.2012
(51) Int. Cl.: G06F 3/01, B60K 37/06, G06F 3/0481, G06F 3/0354

(54) **Operation input system**

(30) Priority: 27.12.2011 JP 2011286488
(71) Applicant: AISIN AW CO., LTD., Anjo-shi, Aichi 444-1192 (JP)
(72) Inventor: Adachi, Kazuhide, Anjo-shi, Aichi 444-1192 (JP); Koyama, Ryoji, Anjo-shi, Aichi 444-1192 (JP)
(74) Representative: TBK

(57) **Abstract**

An operation input system comprising: a touch pad that includes an operation plate, on a surface of which an operation surface is formed, and senses an object to be sensed in contact with or in proximity to the operation surface to receive input corresponding to a position of the sensed object; a plurality of protrusion members, distal end portions of which can penetrate through the operation plate to protrude from the operation surface; a state sensing section that senses a first state in which at least one of the distal end portions are above the operation surface and a second state in which no distal end portions is above the operation surface; and an input reception section that receives input to the protrusion member in the case where the state sensing section senses that the protrusion member has been changed from the first state to the second state.

## Description

### BACKGROUND OF THE INVENTION

The present invention relates to an operation input system including a touch pad serving as a pointing device.

### Description of the Related Art

Devices including an operation input system as standard equipment are utilized in laptop personal computers etc., for example. The operation input system includes a touch pad serving as a pointing device. A user performs a slide operation using a fingertip, the tip of a stylus pen, or the like on an operation surface provided on a surface of the touch pad to move an operation cursor displayed on a display screen communicably connected to the touch pad. In addition, the user performs a predetermined operation on the operation surface with the operation cursor displayed on the display screen located over an operation figure (such as an operation icon, for example) to achieve a function associated with the operation figure. The thus configured operation input system including the touch pad may be utilized to perform predetermined operation input to in-vehicle navigation apparatuses.

The in-vehicle navigation apparatuses are often operated by a driver of a vehicle. In such a case, the user (a driver of the vehicle) operates the navigation apparatus in between driving. Therefore, it is difficult to perform an operation while closely watching the display screen, and a desired operation may not be performed accurately. In view of this point, there is proposed an operation input system that allows to perform operation input utilizing tactile sensation (a tactile feel) without closely watching a display screen. For example, Japanese Patent Application Publication No. 2006-268068 (JP 2006-268068 A) discloses a technology by which the entirety of an operation surface is covered with fiber hair and fiber hair provided at a position on the operation surface corresponding to the position of an operation figure displayed on a display device is caused to stand up. In the system according to JP 2006-268068 A, however, the entirety of the operation surface is covered with fiber hair. Thus, there remains an ambiguity in discrimination through tactile sensation between standing fiber hair standing and non-standing fiber hair.

In inputting a predetermined operation (such as inputting a select operation, for example) using the touch pad, a so-called tap operation is often required. In general, the tap operation is performed by temporarily moving a fingertip or the like, which has been in contact with the operation surface, away from the operation surface and thereafter bringing the fingertip into contact with the operation surface again. From the viewpoint of convenience to the user, however, it is preferable that operation input can be performed intuitively, rather than requiring a complicated operation such as the tap operation. The operation input system according to the related art leaves room for improvement in this point.

### SUMMARY OF THE INVENTION

In view of the foregoing, it is an object of the invention to provide an operation input system that enables to perform reliable operation input compared to the related art without closely watching a display screen, and that enables to perform operation input in a highly convenient manner.
This object is achieved by an operation input system according to claim 1. Advantageous further developments are as set forth in the dependent claims.

According to an aspect of the present invention, there is provided an operation input system including: a touch pad that includes an operation plate, on a surface of which an operation surface is formed, and senses an object to be sensed in contact with or in proximity to the operation surface to receive input corresponding to a position of the sensed object; a plurality of protrusion members, distal end portions of which can penetrate through the operation plate to protrude from the operation surface; a state sensing section that senses a first state in which at least one of the distal end portions are above the operation surface and a second state in which no distal end portions is above the operation surface; and an input reception section that receives input to the protrusion member in the case where the state sensing section senses that the protrusion member has been changed from the first state to the second state.

According to the aspect, a predetermined operation can be input to another device communicably connected to the operation input device in accordance with the position of the object to be sensed in contact with or in proximity to the operation surface of the touch pad. The plurality of protrusion members can penetrate through the operation plate on the front surface of the touch pad to protrude from the operation surface. That is, the protrusion members are movable between the first state and the second state. When the protrusion member is in the second state, a portion of the operation surface around the protrusion member is flat. When the protrusion member is in the first state, in contrast, the distal end portion of the protrusion member is distinctly protruded from the operation surface so as to be directly recognizable by a user through tactile sensation using a fingertip or the like. Hence, by bringing the protrusion member positioned at the coordinates on the operation surface corresponding to the coordinates of an operation figure displayed on a display device into the first state, for example, the user may perform operation input to the operation surface at that position in reliance on the protrusion member in the first state. Thus, it is possible to provide an operation input system that enables to perform reliable operation input compared to the related art without closely watching a display screen.
The aspect also allows to receive input to the protrusion member, besides receiving normal input performed using the touch pad. In this event, the user can perform operation input just by recognizing through tactile sensation a target protrusion member in the first state through a slide operation performed on the operation surface using a fingertip or the like and thereafter depressing the protrusion member into the second state. Hence, operation input can be performed in a highly convenient manner with no need for a complicated operation such as a tap operation.

The operation input system may further include a protrusion control section that controls positions of the protrusion members with respect to the operation surface in a protrusion direction, and a display device that includes a display screen and displays an image on the display screen; the protrusion control section may correlate coordinates of the display screen and coordinates of the operation surface with each other, and cause the protrusion member positioned at coordinates on the operation surface corresponding to coordinates of an operation figure displayed on the display screen to protrude from the operation surface; and the input reception section may receive input to the operation figure corresponding to the protrusion member in the case where it is sensed that the protrusion member has been changed from the first state to the second state.

According to the above configuration, the protrusion control section controls the position of the protrusion members in the protrusion direction, and the protrusion members are advanced and retracted to be moved between the first state and the second state. In addition, the protrusion control section correlates coordinates of the display screen and coordinates of the operation surface with each other, and brings the protrusion member positioned at coordinates on the operation surface corresponding to coordinates of an operation figure displayed on the display screen into the first state. This allows the user to easily associate the position of the operation figure on the display screen and the position of the protrusion member in the first state on the operation surface recognized through tactile sensation, and to easily select the desired operation figure.

The operation input device may further include a difference determination section that, when the image displayed on the display screen is switched along with the reception of input to the operation figure, determines a difference between a position in the protrusion direction corresponding to the image before the switching and a position in the protrusion direction corresponding to the image after the switching for each of the protrusion members, and the protrusion control section may maintain or change the position of each of the protrusion members in the protrusion direction on the basis of results of the determination performed by the difference determination section.

According to the above configuration, the protrusion members can be protruded appropriately at positions on the operation surface corresponding to the positions on the display screen of operation figures included in the image after the switching displayed on the display screen, by performing necessary minimum changes to the positions of the protrusion members in the protrusion direction.

The protrusion control section may temporarily bring all the protrusion members into the second state or the first state when the image displayed on the display screen is switched along with the reception of input to the operation figure, and thereafter cause only the protrusion member corresponding to the coordinates of the operation figure to protrude from the operation surface.

According to the above configuration, the protrusion members can be protruded appropriately at positions on the operation surface corresponding to the positions on the display screen of operation figures included in the image after the switching displayed on the display screen through a relatively simple process, by temporarily initializing the positions of all the protrusion members in the protrusion direction.

### BRIEF DESCRIPTION OF THE DRAWINGS

FIG. 1 is a schematic view showing an operation input system as mounted on a vehicle;
FIG. 2 is a block diagram showing a schematic configuration of a navigation apparatus;
FIG. 3 is a block diagram showing a schematic configuration of the operation input system;
FIG. 4 is a perspective view of a touch pad provided in an operation input device;
FIG. 5 is a sectional view showing the configuration of a drive mechanism;
FIG. 6 shows an example of operation input performed utilizing the operation input system;
FIG. 7 shows an example of operation input performed utilizing the operation input system;
FIG. 8 shows an example of operation input performed utilizing the operation input system;
FIG. 9 is a flowchart showing the overall process procedures of an operation input reception process; and
FIG. 10 is a flowchart showing the process procedures of an input determination process.

### DETAILED DESCRIPTION OF THE EMBODIMENTS

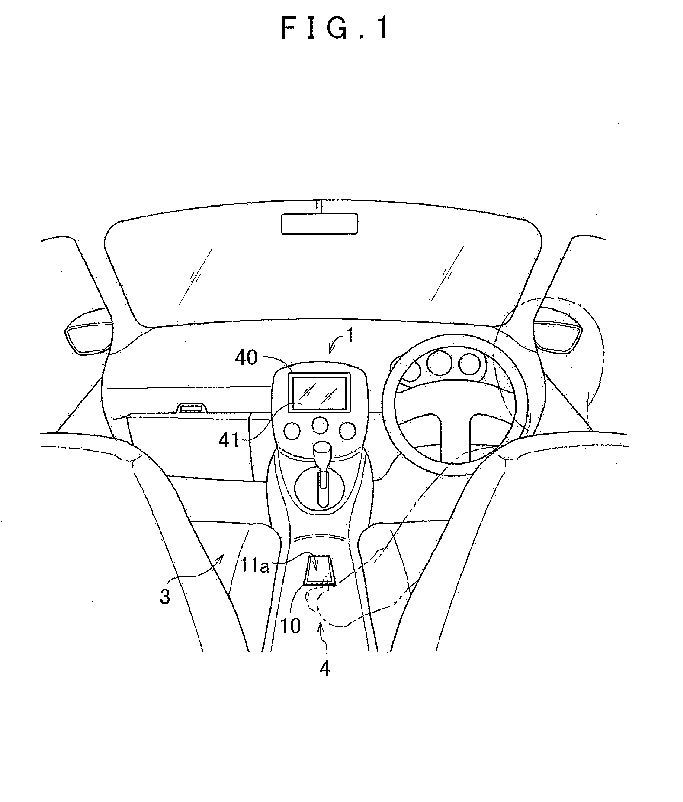

An operation input system according to an embodiment of the present invention will be described with reference to the drawings. In the embodiment, an operation input device 4 configured to perform (predetermined) operation input prescribed in advance to an in-vehicle navigation apparatus 1 (see FIG. 1) is described. The operation input device 4 forms an operation input system 3 together with a display input device 40 communicably connected to the navigation apparatus 1. In the following, a schematic configuration of the navigation apparatus 1, the configuration of the operation input device 4, the configuration of the operation input system 3, and the procedures of an operation input reception process will be described sequentially in this order.

### 1. Schematic Configuration of Navigation Apparatus

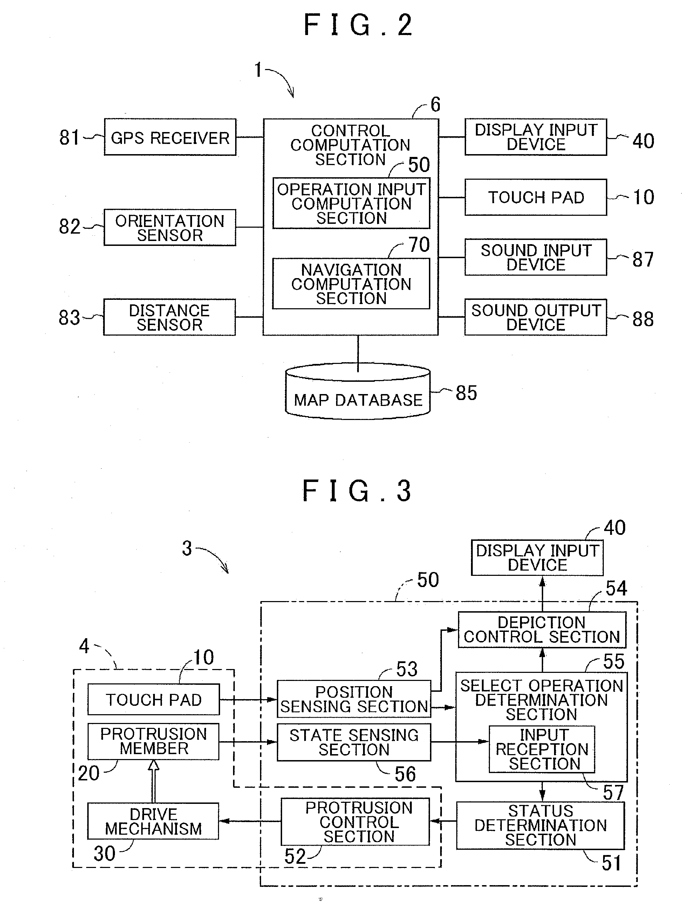

A schematic configuration of the navigation apparatus 1 will be described with reference to FIGS. 1 and 2. The navigation apparatus 1 is configured to achieve basic functions such as displaying the vehicle position, searching for a route from a departure place to a destination, providing route guidance, and searching for a destination. To this end, the navigation apparatus 1 includes a control computation section 6 as shown in FIG. 2. The control computation section 6 includes an arithmetic processing unit such as a CPU as its core member, and may be implemented by hardware, software, or a combination of both as a functional section configured to perform various processes on input data. The control computation section 6 includes a navigation computation section 70. In addition, the control computation section 6 is communicably connected to a GPS receiver 81, an orientation sensor 82, a distance sensor 83, a map database 85, the display input device 40, the touch pad 10, a sound input device 87, and a sound output device 88.

The GPS receiver 81 receives GPS signals from Global Positioning System (GPS) satellites. The orientation sensor 82 detects the orientation of travel of the vehicle or variations in orientation of travel of the vehicle. The distance sensor 83 detects the vehicle speed and the travel distance of the vehicle. As well known, the navigation computation section 70 can derive an estimated vehicle position on the basis of information obtained from the GPS receiver 81, the orientation sensor 82, and the distance sensor 83, and further on the basis of map matching known in the related art.

The map database 85 stores map data divided for each predetermined partition. The map data include road network data including the connection relationship between a plurality of nodes corresponding to intersections and a plurality of links corresponding to roads connecting between the nodes. Each node has information on its position on the map expressed by the latitude and the longitude. Each link has information such as the road type, the length of the link, and the road width as its attribute information. The map database 85 is referenced by the navigation computation section 70 during execution of processes such as displaying a map, searching for a route, and map matching. The map database 85 is stored in a storage medium such as a hard disk drive, a flash memory, or a DVD-ROM.

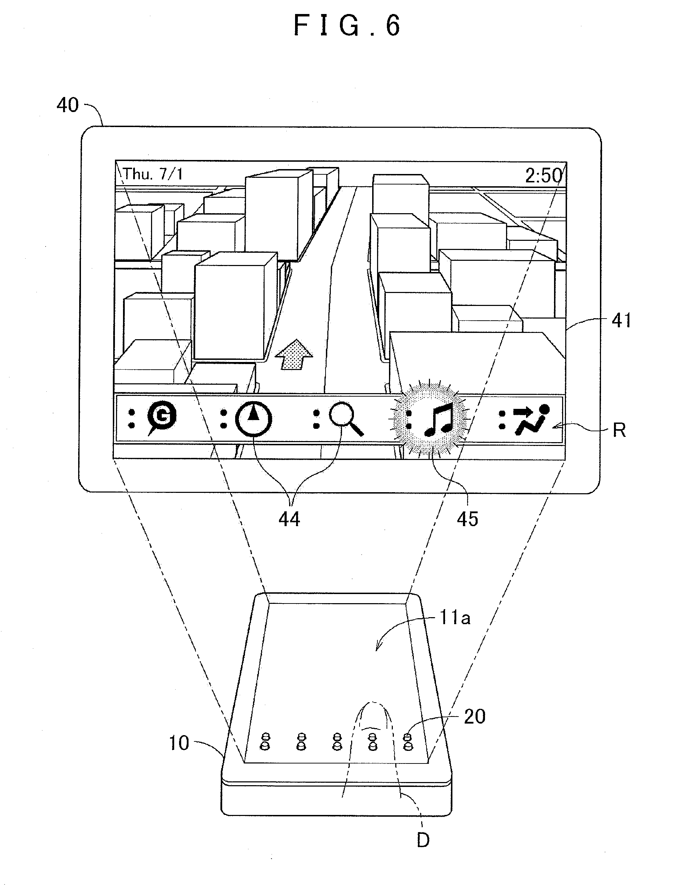

The display input device 40 is formed by integrating a display device such as a liquid crystal display device and an input device such as a touch panel. The display input device 40 includes a display screen 41, and displays on the display screen 41 a map of an area around the vehicle, images such as an operation figure 44 (see FIG. 6) associated with a predetermined function, and so forth, for example. In the embodiment, the display input device 40 corresponds to the "display device" according to the present invention. The operation figure 44 is a figure displayed on the display screen 41 to make it easy for the user (a passenger of the vehicle) to perceive a particular function to be achieved by operating the touch panel or the touch pad 10 to transfer operation input to the navigation apparatus 1. Examples of the operation figure 44 include operation icons, button images, and character key images depicted as illustrations or the like. The display input device 40 senses an object to be sensed in contact with or in proximity to the touch panel to receive input corresponding to the position of the sensed object. For example, the user may bring the object to be sensed such as a fingertip or the tip of a stylus pen in contact with or in proximity to the operation figure 44 displayed on the display screen 41 to select the operation figure 44 and achieve a function associated with the operation figure 44. In addition, the user may bring the object to be sensed in contact with or in proximity to a position other than the operation figure 44 displayed on the display screen 41 to select a location on a map, for example. The display input device 40 functions as a first operation input unit.

As shown in FIG. 1, the touch pad 10 is provided separately from the display input device 40. The touch pad 10 includes an operation surface 11 a, and senses an object to be sensed D (see FIG. 6) in contact with or in proximity to the operation surface 11a to receive input corresponding to the position of the sensed object. An operation cursor 45 (see FIG. 6) is displayed on the display screen 41 in correspondence with the position of the object sensed by the touch pad 10 serving as a pointing device. The user slides the object to be sensed D such as a fingertip in contact with or in proximity to the operation surface 11a to move the operation cursor 45 on the display screen 41. Then, the user may perform a predetermined operation on the operation surface 11 a with the operation cursor 45 located over the operation figure 44 to select the operation figure 44 and achieve a function associated with the operation figure 44. In addition, the user may perform a predetermined operation on the operation surface 11 a with the operation cursor 45 located over a position other than the operation figure 44 displayed on the display screen 41 to select a location on a map, for example. The touch pad 10 functions as a second operation input unit.

The display input device 40 is disposed at a position at which the display input device 40 may be seen without the need for the user (in particular, the driver of the vehicle) to significantly change his/her viewing direction during drive so as to be easily seeable by the user. In the example shown in FIG. 1, the display input device 40 is disposed at the center portion of the upper surface of a dashboard. However, the display input device 40 may be disposed in an instrument panel, for example. Meanwhile, the touch pad 10 is disposed at a position close to the hand of the user so as to be easily operable by the user. That is, the touch pad 10 is disposed at a position closer to the hand of the user and farther from the viewing direction than the display input device 40. In the example shown in FIG. 1, the touch pad 10 is disposed at a center console portion. However, the touch pad 10 may be disposed at the center portion of the upper surface of a dashboard, at a spoke portion of a steering wheel, or on a door panel, for example.

The sound input device 87 receives voice input from the user. The sound input device 87 includes a microphone or the like. The navigation computation section 70 may achieve functions such as searching for a destination through voice recognition and making a handsfree call on the basis of voice received through the sound input device 87. The sound input device 87 functions as a third operation input unit. The sound output device 88 includes a speaker or the like. The navigation computation section 70 may achieve functions such as providing voice guidance via the sound output device 88.

In the present invention, the specific configuration of the touch pad 10 serving as the second operation input unit, among various devices communicably connected to the navigation apparatus 1, has a novel feature in contrast to its counterpart according to the related art. Thus, the configuration of the operation input device 4 formed to include the touch pad 10 and the configuration of the operation input system 3 formed to include the operation input device 4 will be described in detail below.

### 2. Configuration of Operation Input Device

As shown in FIGS. 3 to 5, the operation input device 4 includes the touch pad 10, protrusion members 20, and drive mechanisms 30. The operation input device 4 is schematically configured such that the protrusion members 20 driven by the drive mechanisms 30 can protrude (appear and disappear) from the surface of the touch pad 10.

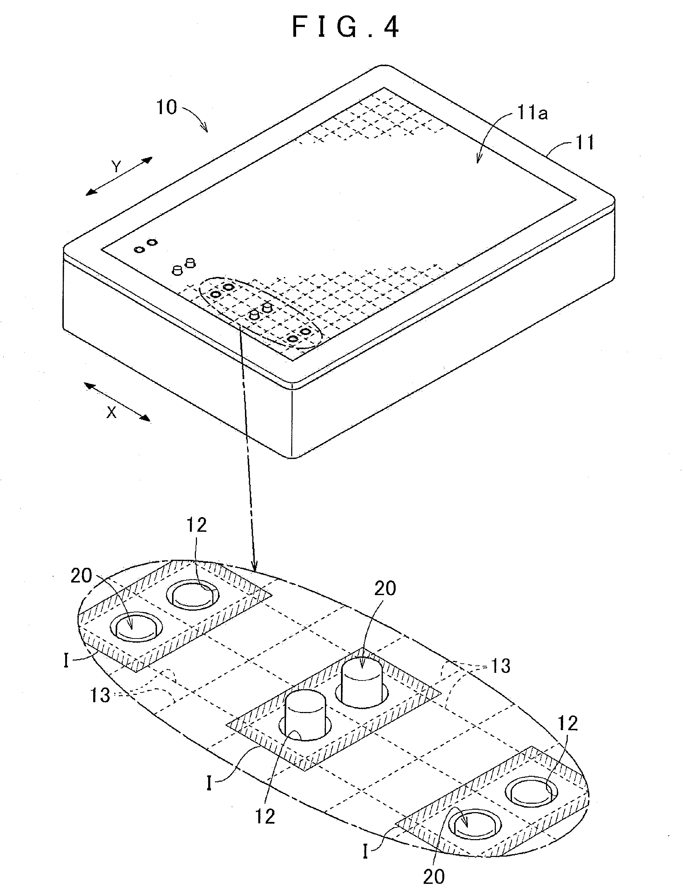

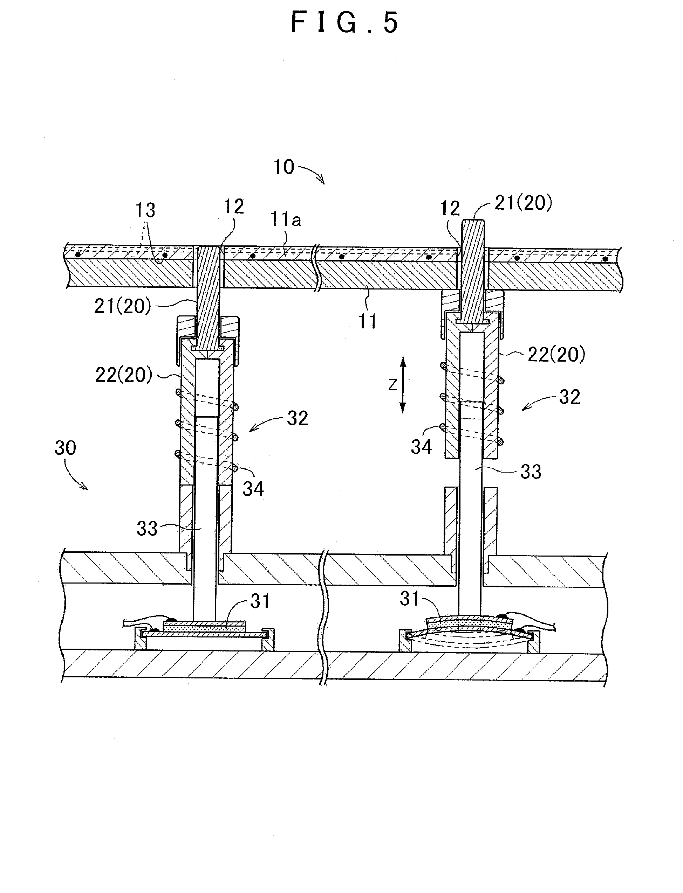

As shown in FIGS. 4 and 5, the touch pad 10 includes an operation plate 11, and the operation surface 11a is formed on the surface of the operation plate 11. The thus configured touch pad 10 may be of a variety of types such as a resistance film type and a capacitance type. In the example, the touch pad 10 is of the capacitance type. A substrate and an electrode layer are provided on the back surface side of the operation surface 11a. The touch pad 10 senses the object to be sensed D such as a fingertip in contact with or in proximity to the operation surface 11 a to receive input corresponding to the position of the sensed object.

The operation plate 11 is provided with a hole portion 12 that penetrates through the operation plate 11. In the embodiment, a plurality of (in the example, ten) such hole portions 12 are provided. In the example, two hole portions 12 are arranged along the Y direction of the operation surface 11 a, and a total of five pairs of such hole portions 12 are arranged at equal intervals along the X direction. In the embodiment, in addition, each of the hole portions 12 is formed to have a circular shape as seen from the surface side of the operation plate 11. Conductive wiring members 13 connected to the electrode layer provided on the back surface side of the operation surface 11a are disposed in a grid along the operation surface 11a, and each of the hole portions 12 is provided so as to avoid the wiring members 13. That is, in the example, each of the hole portions 12 is provided in a rectangular region surrounded by a plurality of wiring members 13 so as not to interfere with any of the wiring members 13. This prevents the function of the touch pad 10 from being impaired by the plurality of hole portions 12 provided in the operation plate 11.

The protrusion member 20 is inserted into each of the hole portions 12. Thus, in the example, a plurality of (in the example, ten, as with the hole portions 12) protrusion members 20 are also provided. In addition, two protrusion members 20 are arranged along the Y direction of the operation surface 11a, and five pairs of such protrusion members 20 are arranged at equal intervals along the X direction. A region on the touch pad 10 in which the hole portions 12 and the protrusion members 20 are disposed corresponds to a region on the display screen 41 in which an operation figure display region R (see FIG. 6) to be discussed later is disposed.

As shown in FIG. 5, the protrusion member 20 includes a pin member 21 formed in the shape of an elongated circular column (pin) and a tubular member 22 that is generally cylindrical. The diameter of the pin member 21 is slightly smaller than the diameter of the hole portion 12. The tubular member 22 is formed by two semi-cylindrical members obtained by dividing the tubular member 22 into two equal halves along the axial direction of the tubular member 22. The pin member 21 is retained by the tubular member 22 with the lower end portion of the pin member 21 sandwiched between the two semi-cylindrical members. In the example, the distal end portion (upper end portion) of the pin member 21 is inserted into each of the hole portions 12. In a reference state (state on the left side of FIG. 5) in which the protrusion member 20 is not driven by the drive mechanism 30, the distal end portion (distal end surface) of the pin member 21 which is formed to be flat is flush with the level of the operation surface 11a.

As shown in FIG. 5, the drive mechanism 30 is provided on the back surface side with respect to the operation plate 11. The drive mechanism 30 is configured to cause advancing/retracting operation of the protrusion member 20 along a direction (referred to as "advancing/retracting operation direction Z") intersecting (in the example, orthogonally intersecting) the operation surface 11a. The drive mechanism 30 includes a piezoelectric element 31.

The piezoelectric element 31 is a passive element that utilizes a piezoelectric effect, and converts a voltage applied to a piezoelectric body into a force, or converts an external force applied to the piezoelectric body into a voltage. The piezoelectric element 31 is provided to vibrate in the advancing/retracting operation direction Z. A coupling member 33 is coupled to the piezoelectric element 31 to vibrate together with the piezoelectric element 31. The coupling member 33 is formed in the shape of an elongated circular column (pin). The distal end portion of the coupling member 33 opposite to the side on which the coupling member 33 is coupled to the piezoelectric element 31 is inserted into a space inside the tubular member 22. The diameter of the coupling member 33 is substantially equal to the inside diameter of the tubular member 22. The outer peripheral surface of the coupling member 33 and the inner peripheral surface of the tubular member 22 contact each other.

A spring member 34 is provided at a position at which the coupling member 33 and the tubular member 22 contact each other so as to surround the tubular member 22 from the outer peripheral side. The spring member 34 provides an inward preliminary pressure with a predetermined magnitude to cause a predetermined friction force between the coupling member 33 and the tubular member 22 forming the protrusion member 20. The preliminary pressure applied by the spring member 34 is set such that the static friction force between the coupling member 33 and the tubular member 22 is at least larger than a component of a gravitational force acting on the protrusion member 20 in the advancing/retracting operation direction Z. In addition, the preliminary pressure is set such that the coupling member 33 and the tubular member 22 can slide with respect to each other with a dynamic friction force caused between the coupling member 33 and the tubular member 22 along with vibration of the piezoelectric element 31. In the embodiment, a slide mechanism 32 is formed by a slide section formed by the tubular member 22 and the coupling member 33 and the spring member 34 serving as a preliminary pressure application unit.

In the embodiment, in addition, the magnitude relationship between the speed of vibration of the piezoelectric element 31 to one side along the advancing/retracting operation direction Z and the speed of vibration of the piezoelectric element 31 to the other side can be adjusted by a protrusion control section 52 (see FIG. 3) included in an operation input computation section 50 to be discussed later. When the speed of vibration to the protrusion direction side (surface side with respect to the operation surface 11a) is lower than the speed of vibration to the retraction direction side (back surface side with respect to the operation surface 11a), which is opposite to the protrusion direction side, the protrusion member 20 is moved to the protrusion direction side on the basis of the difference between the static friction and the dynamic friction caused between the coupling member 33 and the tubular member 22. This allows the distal end portion of the protrusion member 20 (pin member 21) to be protruded to the surface side with respect to the operation surface 11 a. That is, the protrusion member 20 may be brought into a state (protruded state) in which the distal end portion of the protrusion member 20 penetrates through the operation plate 11 to be protruded to the surface side with respect to the operation surface 11 a. The protruded state is a state in which the distal end portion of the protrusion member 20 is above the operation surface 11 a along the advancing/retracting operation direction Z, and corresponds to the "first state" according to the present invention.

When the speed of vibration to the retraction direction side is lower than the speed of vibration to the protrusion direction side, on the other hand, the protrusion member 20 is moved to the retraction direction side. That is, the protrusion member 20 may be brought into a state (retracted state) in which the distal end portion of the protrusion member 20 is retracted to the back surface side with respect to the operation plate 11. The "retracted state" includes a state in which the distal end portion of the pin member 21 of the protrusion member 20 is flush with the level of the operation surface 11a. The retracted state is a state in which the distal end portion of the protrusion member 20 is not above the operation surface 11 a along the advancing/retracting operation direction Z, and corresponds to the "second state" according to the present invention.

In the embodiment, the drive mechanism 30 is formed by the piezoelectric element 31, the slide mechanism 32, and the protrusion control section 52 included in the operation input computation section 50. In FIG. 3, for convenience, the protrusion control section 52 is shown separately from the drive mechanism 30. The plurality of protrusion members 20 can be independently moved between the protruded state and the retracted state by the drive mechanism 30. The operation input device 4 according to the embodiment thus includes a combination of the touch pad 10 and the plurality of protrusion members 20 provided so as to freely appear and disappear from the operation surface 11a of the touch pad 10.

A configuration including a combination of the touch pad 10 of the capacitance type and the drive mechanism 30 which uses the piezoelectric element 31 as in the embodiment is particularly preferable. The touch pad 10 of the capacitance type detects the position of the object to be sensed D on the operation surface 11a on the basis of variations in capacitance between the operation surface 11 a and the object to be sensed D such as a fingertip of the user. In the case where the touch pad 10 of the capacitance type is provided and the drive mechanism 30 which uses an actuator other than the piezoelectric element 31 (such as a motor or a solenoid, for example), noise can be caused along with drive of the actuator to vary the capacitance. As a result, the accuracy in detecting the position of the object to be sensed D on the touch pad 10 can be reduced. If the actuator of the drive mechanism 30 is the piezoelectric element 31 as in the embodiment, in contrast, noise caused along with drive of the actuator is suppressed to be very low. Therefore, the accuracy in detecting the position of the object to be sensed D on the touch pad 10 may be maintained at a high level even if the touch pad 10 is of the capacitance type.

### 3. Configuration of Operation Input System

As shown in FIG. 3, the operation input system 3 includes the operation input device 4 discussed above, the display input device 40, and the operation input computation section 50 interposed between the operation input device 4 and the display input device 40. In the embodiment, the operation input computation section 50 is incorporated in the control computation section 6 forming the navigation apparatus 1 (see FIG. 2). It should be noted, however, that the present invention is not limited to such a configuration, and that the operation input computation section 50 may be provided independently of the control computation section 6. The operation input device 4 and the display input device 40 are communicably connected to each other via the operation input computation section 50.

The operation input computation section 50 includes a status determination section 51, the protrusion control section 52, a position sensing section 53, a depiction control section 54, and a select operation determination section 55. In the embodiment, in addition, the operation input computation section 50 further includes a state sensing section 56 and an input reception section 57.

The status determination section 51 determines a protrusion status representing the state of protrusion of each of the protrusion members 20 in accordance with the image content displayed on the display screen 41. In the embodiment, the protrusion status includes the "protruded state" and the "retracted state". The "retracted state" as one type of the protrusion status is a state in which the protrusion member 20 is at the minimally displaced position within its movable range in the advancing/retracting operation direction Z (with the distal end portion of the pin member 21 flush with the level of the operation surface 11a). The "protruded state" as the other type of the protrusion status is a state in which the protrusion member 20 is at the maximally displaced position within its movable range in the advancing/retracting operation direction Z. In the embodiment, the status determination section 51 determines which one of the protruded state and the retracted state each of the protrusion members 20 is to be brought into.

As discussed above, the display screen 41 may display an image of the operation figure 44 associated with a predetermined function besides a map image of an area around the vehicle position. For example, in the example shown in FIG. 6, images of five operation figures 44 are displayed side by side in a horizontal row at equal intervals in the operation figure display region R set on the lower side on the display screen 41, and superimposed on the map image of the area around the vehicle position. Such operation figures 44 correspond to main functions for operating the navigation apparatus 1 and various accessories of the vehicle. For example, the operation figures 44 are associated with a probe traffic information display function, a vehicle position display function, a destination search function, an audio setting function, and an air conditioner setting function, sequentially in this order from the left. In the example, images of a maximum of five operation figures 44, for example, may be displayed in the operation figure display region R.

The status determination section 51 correlates the coordinates of the display screen 41 and the coordinates of the operation surface 11a, and determines that the protrusion status of one or more protrusion members 20 positioned at the coordinates on the operation surface 11 a corresponding to the coordinates on the display screen 41 of the operation figure 44 being displayed is the protruded state. In the embodiment, the status determination section 51 determines that the protrusion status of each of a pair of (two) protrusion members 20 arranged in the Y direction for one displayed operation figure 44 is the protruded state. On the other hand, the status determination section 51 determines that the protrusion status of the protrusion members 20 positioned at the coordinates on the operation surface 11a corresponding to the coordinates on the display screen 41 of a region in which the operation figure 44 is not displayed is the retracted state. In the example of FIG. 6, images of five operation figures 44 are displayed in the operation figure display region R, five being the upper limit number of displayable operation figures 44. Thus, it is determined that the protrusion status of all the ten protrusion members 20 is the protruded state.

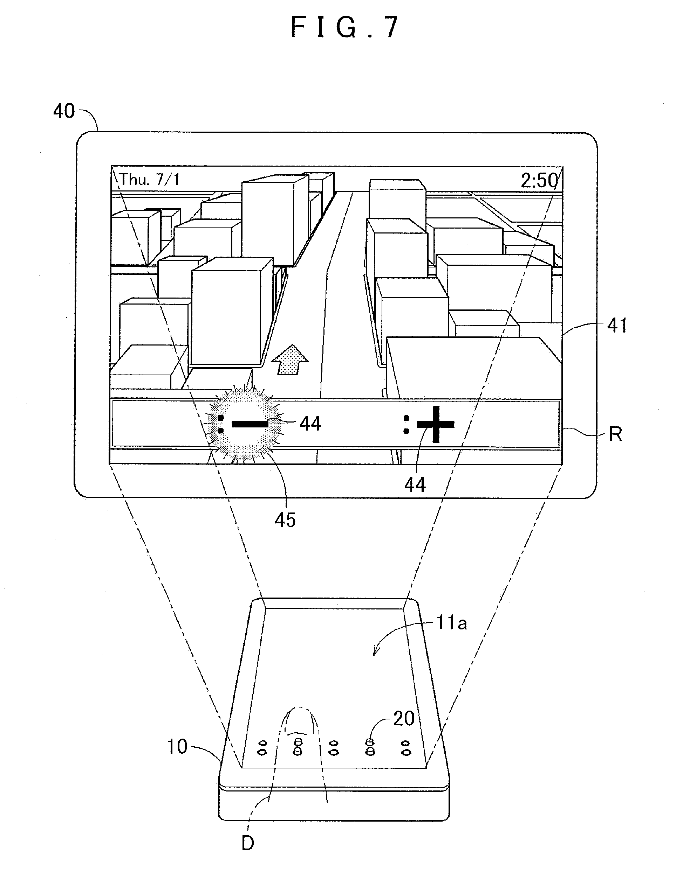

In the case where the image displayed on the display screen 41 is changed, in addition, the status determination section 51 determines a difference between the protrusion status corresponding to the image before the change and the protrusion status corresponding to the image after the change for each of the protrusion members 20. The status determination section 51 determines which one of "not changed", "transitioned to the protruded state", and "transitioned to the retracted state" is applied to each of the protrusion members 20. In the case where the operation figure 44 associated with the audio setting function is selected in FIG. 6, switching is made to a screen including images of two operation figures 44 for volume adjustment as shown by way of example in FIG. 7. In this case, among the five operation figures 44 displayed side by side, two at both ends and one at the center disappear, and the remaining two are maintained on display although the images are changed. Thus, in such a case, for example, the status determination section 51 determines that the protrusion status of each pair of (every two) protrusion members 20 arranged in the Y direction is "transitioned to the retracted state", "not changed", "transitioned to the retracted state", "not changed", and "transitioned to the retracted state", sequentially in this order along the Y direction. In the embodiment, the status determination section 51 corresponds to the "difference determination section" according to the present invention.

The status determination section 51 outputs information on the protrusion status, or the difference in protrusion status, determined for each of the protrusion members 20 to the protrusion control section 52.

The protrusion control section 52 controls the position of the protrusion member 20 with respect to the operation surface 11 a in the protrusion direction (which coincides with the advancing/retracting operation direction Z). The protrusion control section 52 controls the drive mechanism 30 on the basis of the information received from the status determination section 51. In the embodiment, the protrusion control section 52 vibrates the piezoelectric element 31 by applying a pulsed voltage. The protrusion control section 52 is configured to adjust the magnitude relationship between the speed of vibration to one side along the advancing/retracting operation direction Z and the speed of vibration to the other side. Such a configuration may be achieved by changing the duty ratio in accordance with the direction of vibration of the piezoelectric element 31. The protrusion control section 52 moves the protrusion member 20 to the protrusion direction side by making the speed of vibration to the protrusion direction side lower than the speed of vibration to the retraction direction side. On the other hand, the protrusion control section 52 moves the protrusion member 20 to the retraction direction side by making the speed of vibration to the retraction direction side lower than the speed of vibration to the protrusion direction side.

As discussed above, the results of the determination performed by the status determination section 51 are based on whether or not the operation figure 44 is displayed at a predetermined position of the display screen 41. Therefore, in the case where a particular operation figure 44 is displayed on the display screen 41, the protrusion control section 52 brings the protrusion member 20 positioned at the coordinates on the operation surface 11 a corresponding to the coordinates of the operation figure 44 into the protruded state (see FIGS. 6 and 7) by controlling the drive mechanism 30 on the basis of the determination results. In the embodiment, a pair of (two) protrusion members 20 are brought into the protruded state for one operation figure 44. That is, the protrusion control section 52 expresses each operation figure 44 in the form of two protrusion portions arranged side by side in the Y direction of the operation surface 11a.

In addition, the protrusion control section 52 brings the protrusion members 20 positioned at the coordinates on the operation surface 11 a corresponding to the coordinates on the display screen 41 of a region in which the operation figure 44 is not displayed into the retracted state (see FIG. 7). In this way, the protrusion control section 52 brings only the protrusion members 20 corresponding to a particular operation figure 44 displayed on the display screen 41 into the protruded state. In the case where the results of the determination performed by the status determination section 51 is obtained as the difference in protrusion status, the protrusion control section 52 maintains each of the protrusion members 20 in the protruded state or the retracted state, or switches each of the protrusion members 20 between the protruded state and the retracted state, on the basis of the determination results.

The protrusion control section 52 vibrates the piezoelectric element 31 for a predetermined time longer than the time required to switch the protrusion member 20 between the protruded state and the retracted state, and thereafter stops the vibration. That is, a voltage is applied to the piezoelectric element 31 only for the predetermined time, and thereafter application of the voltage is stopped. Even after application of the voltage is stopped, the protrusion member 20 maintains its position in the advancing/retracting operation direction Z through static friction between the coupling member 33 and the tubular member 22.

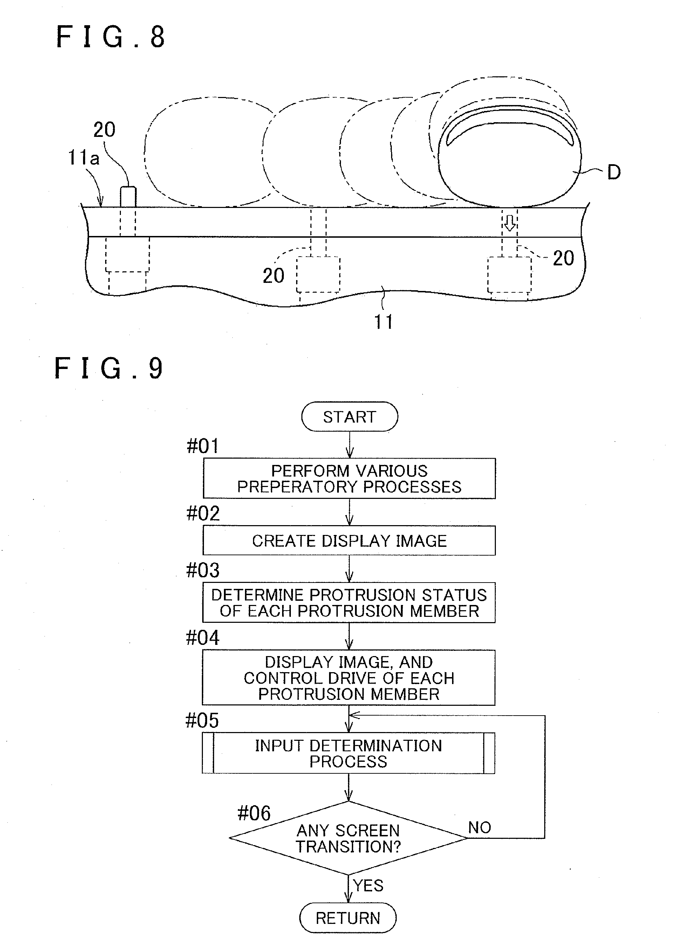

In the embodiment, the protrusion height of the protrusion member 20 which is brought into the protruded state (height of the distal end portion of the protrusion member 20 with reference to the operation surface 11 a) is set to be relatively small. In the case where the object to be sensed D is a fingertip of the user as shown in FIG. 8, for example, the protrusion height may be so small that the difference in height can be absorbed by the flexibility of the ball of a finger intrinsic to a living body when the user slides his/her finger along the operation surface 11a. For example, the protrusion height may be equal to or less than 20% of the thickness of a fingertip. As a matter of course, the protrusion height may be more than that.

The position sensing section 53 acquires a sensed position of the object to be sensed D on the operation surface 11 a of the touch pad 10. The position sensing section 53 specifies the position of an electrode most approached by the object to be sensed D on the basis of variations in capacitance of the electrodes caused when the object to be sensed D such as a fingertip is brought into contact with or into proximity to the operation surface 11 a. Then, the position sensing section 53 acquires the specified position of the electrode as the sensed position on the operation surface 11 a. The touch pad 10 may receive input corresponding to the sensed position on the operation surface 11a through such a function of the position sensing section 53. The position sensing section 53 outputs information on the acquired sensed position to the depiction control section 54 and the select operation determination section 55.

The depiction control section 54 controls depiction of an image to be displayed on the display screen 41. The depiction control section 54 generates a plurality of layers containing images of a background, roads, names of places, etc. around the vehicle position. In addition, the depiction control section 54 generates a layer containing an image of a vehicle position mark representing the vehicle position, and a layer containing an image of a route for guidance to a destination in the case where such a destination is set. Further, the depiction control section 54 generates a layer containing images of the predetermined operation figures 44, and a layer containing an image of the predetermined operation cursor 45. Then, the depiction control section 54 superimposes the generated layers to generate a single display image, and causes the display screen 41 to display the generated image.

The depiction control section 54 causes the main operation figures 44 to be displayed in the operation figure display region R set in the display screen 41 (see FIG. 6). The types of the operation figures 44 to be displayed may differ depending on a request from the user, the running state of the vehicle, or the like. The depiction control section 54 appropriately displays and hides the various types of the operation ffigures 44 depending on the situation.

In addition, the depiction control section 54 appropriately displays and hides the operation cursor 45 in accordance with a request from the user. In the embodiment, in the case where the position sensing section 53 does not sense contact of the object to be sensed D with or proximity of the object to be sensed D to the operation surface 11 a, the depiction control section 54 hides the operation cursor 45. In the case where the position sensing section 53 senses contact of the object to be sensed D with or proximity of the object to be sensed D to the operation surface 11a, on the other hand, the depiction control section 54 displays the operation cursor 45, which has a circular shape in the example, at a position on the display screen 41 corresponding to the sensed position on the operation surface 11 a. In the example, the operation cursor 45 is displayed such that the sensed position and the center position of the operation cursor 45 coincide with each other. In the case where the object to be sensed D in contact with or in proximity to the operation surface 11 a is slid and the sensed position is also slid, the operation cursor 45 being displayed is also moved on the display screen 41 synchronously.

The select operation determination section 55 determines whether or not a select operation is performed for the operation figure 44 displayed on the display screen 41. The select operation determination section 55 determines whether or not a select operation is performed for the operation figure 44 on the basis of a predetermined operation performed on the operation surface 11 a. In addition, in the case where the predetermined operation is sensed in a predetermined region including the position of the protrusion members 20 in the protruded state also on the basis of the position of the protrusion members 20, the select operation determination section 55 determines that a select operation for the operation figure 44 corresponding to the protrusion members 20 has been performed.

In the embodiment, two protrusion members 20 are assigned to one operation figure 44, and the pair of (two) protrusion members 20 have the same protrusion status at all times. Thus, one operation figure assignment region I (see FIG. 4) containing the positions of the pair of (two) protrusion members 20 is set as the "predetermined region" for the pair of (two) protrusion members 20. It should be noted that operation figure assignment regions I corresponding to pairs of protrusion members 20 that are adjacent in the X direction are set so as not to overlap each other. Examples of the "predetermined operation" for determination include an operation of temporarily moving the object to be sensed D, which has been in contact with the operation surface 11a, away from the operation surface 11 a and thereafter bringing the object to be sensed D into contact with the operation surface 11a again (tap operation), and an operation of performing two tap operations momentarily (double-tap operation).

In the embodiment, two protrusion members 20 are assigned to one operation figure 44, and the pair of (two) protrusion members 20 have the same protrusion status at all times. Thus, one operation figure assignment region I (see FIG. 4) containing the positions of the pair of (two) protrusion members 20 is set as the "predetermined region" for the pair of (two) protrusion members 20. It should be noted that operation figure assignment regions I corresponding to pairs of protrusion members 20 that are adjacent in the X direction are set so as not to overlap each other. Examples of the "predetermined operation" for determination include an operation of bringing the object to be sensed D, which has not been in contact with the operation surface 11a, into contact with the operation surface 11a (touch operation), an operation of temporarily moving the object to be sensed D, which has been in contact with the operation surface 11a, away from the operation surface 11a and thereafter bringing the object to be sensed D into contact with the operation surface 11 a again (tap operation), and an operation of performing two tap operations within a predetermined time (double-tap operation).

In the embodiment,, the coordinates of the display screen 41 and the coordinates of the operation surface 11 a are correlated with each other as discussed above, and only the protrusion members 20 corresponding to a particular operation figure 44 displayed on the display screen 41 are brought into the protruded state. When the protrusion members 20 are in the retracted state, a portion of the operation surface 11 a around the protrusion members 20 is flat. When the protrusion members 20 are in the protruded state, in contrast, the distal end portions of the protrusion members 20 are distinctly protruded from the operation surface 11a to provide the user with an operation feeling that utilizes tactile sensation. This allows the user to directly recognize the difference in height through tactile sensation using a fingertip or the like. In addition, the user may easily associate the position of the protrusion member 20 on the operation surface 11a recognized through tactile sensation and the position of the operation figure 44 displayed on the display screen 41 with each other through comparison performed in his/her mind. The user may further perform a touch operation or the like at a desired position on the operation surface 11 a in reliance on the protrusion member 20 recognized through tactile sensation at that position. This allows the user to easily select the desired operation figure 44 without seeing the touch pad 10 provided close to the hand of the user as a matter of course, or even with hardly seeing the display input device 40 provided at a position close to the viewing direction during drive. Thus, the operation input device 4 and the operation input system 3 according to the embodiment allow to perform reliable operation input compared to the related art without closely watching the display screen 41.

In the embodiment, in addition, when the protrusion members 20 are in the retracted state, the distal end portions of the protrusion members 20 are flush with the operation surface 11a of the touch pad 10, which makes the operation surface 11a flat. Thus, an operation performed on the touch pad 10 by the user is not impeded. Hence, by bringing the protrusion members 20 into the retracted state in the case where the operation figures 44 are not displayed on the display screen 41 as in the embodiment, the user may smoothly perform operation input to the operation surface 11a without being hindered by the protrusion members 20. By controlling the protrusion members 20 so as to be advanced and retracted between the protruded state and the retracted state as described above, it is possible to provide an operation feeling that utilizes tactile sensation without impairing the operation feeling of the touch pad 10.

In the embodiment, in addition, each of the operation figure 44 displayed on the display screen 41 is expressed by a pair of (two) protrusion members 20 in the form of two protrusion portions arranged side by side. Therefore, the user may easily grasp the position of the operation figure assignment region I on the operation surface 11a by recognizing the two points at the same location through tactile sensation. In addition, the configuration of the drive mechanism 30 can be advantageously relatively simplified without increasing the number of protrusion members 20 more than necessary.

In the case where it is determined that a select operation for the operation figure 44 has been performed, the select operation determination section 55 outputs information representing the select operation to the navigation computation section 70 etc. to achieve a function associated with the selected operation figure 44. The select operation determination section 55 also outputs the information to the status determination section 51 and the depiction control section 54. Thus, in the case where the image displayed on the display screen 41 is changed in accordance with the function to be achieved next, the display image is updated, and the difference in protrusion status of each protrusion member 20 is determined accordingly.

The state sensing section 56 senses the protruded state and the retracted state of the protrusion members 20. The state sensing section 56 is configured to acquire information from a position sensor (not shown), for example. The state sensing section 56 senses whether the actual protrusion status of each protrusion member 20 is the protruded state or the retracted state on the basis of the acquired information on the position of the protrusion member 20 in the advancing/retracting operation direction Z. The state sensing section 56 outputs information on the sensing results to the input reception section 57 of the select operation determination section 55.

In the case where the state sensing section 56 senses that the protrusion member 20 has been changed from the protruded state to the retracted state, the input reception section 57 receives input to the protrusion member 20. In the embodiment, as described above, the protrusion members 20 corresponding to a particular operation figure 44 displayed on the display screen 41 have been brought into the protruded state. Therefore, receiving input to the protrusion member 20 is equivalent to receiving input to the operation figure 44 corresponding to the protrusion member 20. That is, in the case where it is sensed that the protrusion member 20 has been changed from the protruded state to the retracted state, the input reception section 57 receives input to the operation figure 44 corresponding to the protrusion member 20. The select operation determination section 55 determines on the basis of the received input that a select operation has been performed for the operation figure 44 corresponding to the protrusion member 20.

In the embodiment, in which the thus configured input reception section 57 is provided, a select operation for the operation figure 44 may be received via the protrusion member 20, besides a normal select operation received on the basis of a touch operation or the like on the touch pad 10. In this event, the user may select the desired operation figure 44 just by recognizing through tactile sensation a target protrusion member 20 in the protruded state through a slide operation performed on the operation surface 11a using the object to be sensed D such as a fingertip and thereafter depressing the protrusion member 20 into the retracted state as shown in FIG. 8. That is, the user may select the operation figure 44 through an intuitive operation of taking the protrusion member 20 in the protruded state as a button and depressing the simulated button. Thus, the operation input device 4 and the operation input system 3 according to the embodiment allow to perform operation input in a highly convenient manner.

In the example of a display image switching process described with reference to FIGS. 6 and 7, in the case where the operation figure 44 associated with the audio setting function is selected through a predetermined operation (for example, a double-tap operation) performed on the operation surface 11 a of the touch pad 10, only switching is made to a screen including images of two operation figures 44 for volume adjustment (see FIG. 7). In the case where the operation figure 44 associated with the audio setting function is selected through a depression operation performed on the protrusion member 22, meanwhile, screen switching is made in the same manner as described above, and the protrusion member 20 which has been brought into the retracted state through the depression operation is transitioned to the protruded state again.

### 4. Process Procedures of Operation Input Reception Process

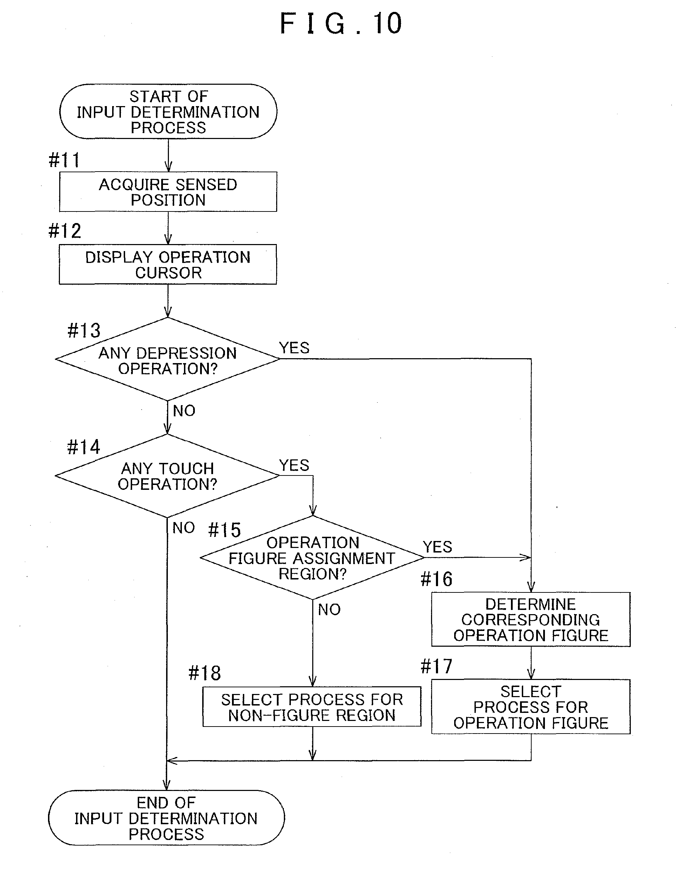

The process procedures of the operation input reception process performed by the operation input system 3 according to the embodiment will be described with reference to FIGS. 9 and 10. The procedures of the operation input reception process described below are executed by hardware or software (a program) implementing the functional sections of the operation input computation section 50, or a combination of both. In the case where the functional sections are implemented by a program, the arithmetic processing unit provided in the control computation section 6 including the operation input computation section 50 operates as a computer that executes the program implementing the functional sections.

In the operation input reception process, as shown in FIG. 9, first, various preparatory processes are executed (step #01). Examples of the preparatory processes include preparing a work area for creating a display image. Next, a display image is actually created (step #02). The protrusion status of each protrusion member 20 is determined (step #03). The determination results are set in the form of ON/OFF, for example. Next, an image is displayed on the display screen 41 and the drive mechanism 30 drives the protrusion member 20 so as to be advanced and retracted (step #04) on the basis of the display image created in step #02 and the protrusion status determined in step #03. This causes the protrusion members 20 corresponding to a particular operation figure 44 displayed on the display screen 41 to be brought into the protruded state. The protrusion members 20 corresponding to the operation figures 44 which are not displayed are brought into the retracted state. An input determination process is executed in this state (step #05).

In the input determination process, as shown in FIG. 10, a sensed position of the object to be sensed D on the operation surface 11a is acquired (step #11). The operation cursor 45 is displayed at a position on the display screen 41 corresponding to the acquired sensed position (step #12). In the case where the sensed position of the object to be sensed D is moved on the operation surface 11a, the operation cursor 45 being displayed is also moved on the display screen 41 accordingly. After that, it is determined whether or not an operation (depression operation) is performed to forcibly transition the protrusion member 20 which has been in the protruded state into the retracted state (step #13). In the case where it is determined that such a depression operation is not performed (step #13: No), it is determined whether or not a touch operation (including a tap operation and a double-tap operation) is performed on the operation surface 11a (step #14). In the case where it is determined that such a touch operation is not performed (step #14: No), the input determination process is terminated.

In the case where a touch operation is sensed in step #14 (step #14: Yes), it is determined whether or not the position at which the touch operation is sensed falls within the operation figure assignment region I (step #15). In the case where it is determined that the sensed position falls within the operation figure assignment region I (step #15: Yes) or in the case where it is determined in step #13 that a depression operation for the protrusion member 20 has been sensed (step #13: Yes), the type of the operation figure 44 corresponding to the operation figure assignment region I or the protrusion member 20 which has been subjected to the depression operation is determined (step #16). Then, the operation figure 44 is selected, and the function associated with the operation figure 44 (such as a destination search function or an audio setting function, for example) is achieved (step #17). In this case, there may be a case where a plurality of operation figures 44 are selected and it is difficult to determine which operation figure 44 is selected. In such a case, the likelihood of the selection (the estimated degree of coincidence of the selection with the intention of the user) may be determined on the basis of at least one of the number of the protrusion members 20 which have been subjected to the depression operation and the sensed position of the object to be sensed D to decide the selected operation figure 44. After that, the input determination process is terminated. In the case where it is determined in step #15 that the sensed position does not fall within the operation figure assignment region I (step #15: No), a selection process is executed for a region (non-figure region) other than the operation figure assignment region I (step #18). For example, a process for scrolling a map image such that the position at which the touch operation is sensed is centered in the display screen 41 is executed. The input determination process is thus terminated.

When the input determination process is terminated, the process returns to FIG. 9, and it is determined whether or not the image displayed on the display screen 41 is changed (step #06). In the case where no depression operation or touch operation is sensed in the input determination process, a screen transition is not likely to be performed. In such a case (step #06: No), the input determination process is executed again. In the case where the operation figure 44 is selected as a result of the input determination process, a process for scrolling the map image is executed, or the like, meanwhile, a screen transition may be performed. In such a case (step #06: Yes), the operation input reception process is terminated. The processes in step #01 and the subsequent steps are executed again on the display image after the change. The processes described above are repeatedly successively executed.

### 5. Other Embodiments

Lastly, operation input systems according to other embodiments of the present invention will be described. A configuration disclosed in each of the following embodiments may be applied in combination with a configuration disclosed in any other embodiment unless any contradiction occurs.

(1) In the embodiment described above, the protrusion control section 52 maintains or changes the state of each of the protrusion members 20 on the basis of information on the difference in protrusion status obtained from the status determination section 51 when the image displayed on the display screen 41 is changed along with the selection of the operation figure 44 or the like. However, embodiments of the present invention are not limited thereto. That is, the protrusion control section 52 may temporarily initialize the state of all the protrusion members 20 when the screen is transitioned, and thereafter bring only the protrusion members 20 corresponding to the coordinates of the operation figures 44 included in the image after the change into the protruded state. That is, the protrusion control section 52 may temporarily bring all the protrusion members 20 into the retracted state and thereafter transition the protrusion members 20 corresponding to the operation figures 44 being displayed into the protruded state, or may temporarily bring all the protrusion members 20 into the protruded state and thereafter transition protrusion members 20 other than the protrusion members 20 corresponding to the operation figures 44 being displayed.

(2) In the embodiment described above, the drive mechanism 30 brings the protrusion member 20 into one of the protruded state (a state in which the protrusion member 20 is at the maximally displaced position within its movable range) and the retracted state (a state in which the protrusion member 20 is at the minimally displaced position within its movable range). However, embodiments of the present invention are not limited thereto. That is, the drive mechanism 30 may be configured to bring the protrusion member 20 into an intermediate state between the protruded state and the retracted state. Such an intermediate state is also included in the "first state" according to the present invention. In this case, the protrusion control section 52 may be configured to control stepwise the position of the protrusion member 20 with respect to the operation surface 11 a in the protrusion direction (advancing/retracting operation direction Z) so that the protrusion member 20 can be protruded stepwise.

(3) In the embodiment described above, the drive mechanism 30 includes the piezoelectric element 31, the slide mechanism 32, and the protrusion control section 52. However, embodiments of the present invention are not limited thereto. That is, the drive mechanism 30 may have any specific configuration as long as the drive mechanism 30 can cause advancing/retracting operation of the protrusion member 20 along the advancing/retracting operation direction Z to move the protrusion member 20 between the protruded state and the retracted state. For example, the drive mechanism 30 may utilize a fluid pressure such as a liquid pressure or a gas pressure, or may utilize an electromagnetic force of an electromagnet, a solenoid, or the like. In the case where the touch pad 10 of the capacitance type is provided and a motor, a solenoid, or the like is used as an actuator of the drive mechanism 30, for example, noise can be caused along with drive of the actuator to vary the capacitance. Thus, in such a case, a shield portion (such as an electromagnetic shield, for example) that blocks noise caused along with drive of the actuator is preferably provided.

(4) In the embodiment described above, the protrusion member 20 is driven so as to be advanced and retracted along the advancing/retracting operation direction Z set to a direction orthogonally intersecting the operation surface 11a. However, embodiments of the present invention are not limited thereto. That is, the advancing/retracting operation direction Z may be set to a direction inclined with respect to, rather than orthogonally intersecting, the operation surface 11 a. In this case, in the case where the touch pad 10 is disposed generally horizontally at the center console portion as in the embodiment described above, for example, the advancing/retracting operation direction Z is preferably set to be inclined toward a driver's seat.

(5) In the embodiment described above, the touch pad 10 of the capacitance type which can sense the object to be sensed D in contact with or in proximity to the operation surface 11 a is used. However, embodiments of the present invention are not limited thereto. That is, the touch pad 10 of the resistance film type may also be utilized in place of the touch pad 10 of the capacitance type. Alternatively, the touch pad 10 of a pressure sensitive type which can sense the object to be sensed D in contact with the operation surface 11a may also be utilized.

(6) In the embodiment described above, the operation figure 44 being displayed is expressed by a pair of (two) protrusion members 20 in the form of two protrusion portions arranged side by side. However, embodiments of the present invention are not limited thereto. That is, the operation figure 44 may be simply expressed by one protrusion member 20 in the form of a single protrusion portion. Alternatively, the operation figure 44 may be expressed by three or more protrusion members 20 in the form of a group of protrusion portions that assumes a predetermined shape as a whole. In this case, a multiplicity of hole portions 12 and protrusion members 20 may be arranged regularly over the entire operation surface 11 a, and the multiplicity of protrusion members 20 may be provided over the entire operation surface 11 a so as to freely appear and disappear.

(7) In the embodiment described above, the operation input device 4 is communicably connected to the display input device 40 formed by integrating a display device and an input device such as a touch panel. However, embodiments of the present invention are not limited thereto. That is, the presence of a touch panel (the first operation input unit in the embodiment described above) is not essential, and it is only necessary that the operation input device 4 should be connected to at least a display device including a display screen.

(8) In the embodiment described above, the state sensing section 56 is configured to sense the actual protrusion status of each protrusion member 20 on the basis of information acquired from a position sensor. However, embodiments of the present invention are not limited thereto. For example, the state sensing section 56 may be formed using the piezoelectric element 31 provided in the drive mechanism 30 as a sensor element, by utilizing the characteristics of the piezoelectric element 31. As discussed above, when the protrusion control section 52 drives the protrusion member 20 so as to be advanced and retracted, application of a voltage is stopped after a predetermined time elapses. Therefore, providing a configuration that enables to sense an external force (a depressing force provided by the user) applied to the piezoelectric element 31 via the protrusion member 20 and the coupling member 33 as an electric signal after the stop of the voltage application may achieve a configuration that enables to sense an operation (depression operation) for the protrusion member 20 performed by the user. Then, the state sensing section 56 may sense the actual protrusion status of each protrusion member 20 on the basis of the sensed depression operation and the protrusion status of each protrusion member 20 determined by the status determination section 51. That is, in the case where an electric signal from the piezoelectric element 31 corresponding to the protrusion member 20 in the protruded state is sensed, the state sensing section 56 determines that the protrusion member 20 has been brought into the retracted state. Meanwhile, in the case where a lapse of the predetermined time is detected by a timer or the like after the piezoelectric element 31 corresponding to the protrusion member 20 in the retracted state is vibrated, the state sensing section 56 determines that the protrusion member 20 has been brought into the protruded state.

(9) In the embodiment described above, the operation input computation section 50 includes the functional sections 51 to 57. However, embodiments of the present invention are not limited thereto. That is, the assignment of the functional sections described in relation to the embodiment described above is merely illustrative, and a plurality of functional sections may be combined with each other, or a single functional section may be further divided into sub-sections.

(10) In the embodiment described above, the operation input system 3 allows to perform operation input to the in-vehicle navigation apparatus 1. However, embodiments of the present invention are not limited thereto. That is, the operation input system according to the present invention may allow to perform operation input to a navigation system in which the components of the navigation apparatus 1 described in the embodiment described above are distributed to a server device and an in-vehicle terminal device, a laptop personal computer, a gaming device, and other systems and devices such as control devices for various machines, for example.

(11) Also regarding other configurations, the embodiment disclosed herein is illustrative in all respects, and the present invention is not limited thereto. That is, the scope of the present invention is defined in the appended claims.

The present invention may be suitably applied to an operation input system including a touch pad serving as a pointing device.

## Claims

1. An operation input system (3) comprising:
a touch pad (10) that includes an operation plate, on a surface of which an operation surface (11a) is formed, and is configured to sense an object to be sensed (D) in contact with or in proximity to the operation surface (11a) to receive input corresponding to a position of the sensed object (D);
a plurality of protrusion members (20), distal end portions of which can penetrate through the operation plate to protrude from the operation surface (11a);
a state sensing section (56) that is configured to sense a first state in which at least one of the distal end portions are above the operation surface (11a) and a second state in which no distal end portion is above the operation surface (11a); and
an input reception section (57) that is configured to receive input to the protrusion member (20) in the case where the state sensing section (56) senses that the protrusion member (20) has been changed from the first state to the second state.

2. The operation input system (3) according to claim 1, further comprising:
a protrusion control section (52) that is configured to control positions of the protrusion members (20) with respect to the operation surface (11a) in a protrusion direction; and
a display device (40) that includes a display screen (41) and is configured to display an image on the display screen (41), wherein:
the protrusion control section (52) is configured to correlate coordinates of the display screen (41) and coordinates of the operation surface (11a) with each other, and to cause the protrusion member (20) positioned at coordinates on the operation surface (11a) corresponding to coordinates of an operation figure (44) displayed on the display screen (41) to protrude from the operation surface (11a); and
the input reception section (57) is configured to receive input to the operation figure (44) corresponding to the protrusion member (20) in the case where it is sensed that the protrusion member (20) has been changed from the first state to the second state.

3. The operation input system (3) according to claim 2, further comprising:
a difference determination section (51) that, when the image displayed on the display screen (41) is switched along with the reception of input to the operation figure (44), is configured to determine a difference between a position in the protrusion direction corresponding to the image before the switching and a position in the protrusion direction corresponding to the image after the switching for each of the protrusion members (20), wherein
the protrusion control section (52) is configured to maintain or change the position of each of the protrusion members (20) in the protrusion direction on the basis of results of the determination performed by the difference determination section (51).

4. The operation input system (3) according to claim 2, wherein
the protrusion control section (52) is configured to temporarily bring all the protrusion members (20) into the second state or the first state when the image displayed on the display screen (41) is switched along with the reception of input to the operation figure (44), and to cause thereafter only the protrusion member (20) corresponding to the coordinates of the operation figure (44) to protrude from the operation surface (11a).
